(19) Europäisches Patentamt
European Patent Office
Office européen des brevets

(11) **EP 1 852 681 A1**

(12) **EUROPEAN PATENT APPLICATION**
published in accordance with Art. 158(3) EPC

(43) Date of publication:
**07.11.2007 Bulletin 2007/45**

(51) Int Cl.:
**G01C 21/18** (2006.01)

(21) Application number: **05851122.1**

(22) Date of filing: **21.12.2005**

(86) International application number:
**PCT/RU2005/000654**

(87) International publication number:
**WO 2006/093430 (08.09.2006 Gazette 2006/36)**

(84) Designated Contracting States:
**DE FR IT**

(30) Priority: **21.02.2005 RU 2005104599**

(71) Applicant: **Belenkiy, Vladimir**
**Moscow, 117570 (RU)**

(72) Inventor: **Belenkiy, Vladimir**
**Moscow, 117570 (RU)**

(74) Representative: **Benatov, Emil Gabriel et al**
**Dr. Emil Benatov & Partners, Bl. 36B,**
**Liuliakova gradina Str.**
**1113 Sofia (BG)**

(54) **METHOD FOR ELABORATING NAVIGATION PARAMETERS AND VERTICAL OF A PLACE**

(57) The invention concerns the gyroscopic instrument engineering and can be used in determination of main navigation parameters for marine, air and surface vehicle positioning.

Technical result consists in increased accuracy of output parameters, including substantial increase of the vehicle heading generation accuracy as well as principal improvement of dynamic properties of output parameter generation. To achieve these results control signals of gyro platforms or gyro platform models are generated under the condition that in the absence of ballistic deviations, autonomously, a natural period of the gyro platforms or the gyro platform models differ from Schuler period.

FIG. 1

EP 1 852 681 A1

**Description**

The invention concerns the gyroscopic instrument engineering and can be used in navigation of marine, airborne and surface vehicles.

Well-known is the method of navigation parameters and position vertical generation. This method includes measurement of specific force components using accelerometers, sensitivity axes of which are connected with a gyro platform; generation of gyro platform control signals; following to indicate the generated signals by means of a gyroscope or absolute angular rate sensors [1]. Otherwise this method may include measurement of specific force components using accelerometers; measurement of signals from gyros or absolute angular rate sensors, sensitivity axes of which are directed along axes of instrumental trihedral; analytical solution of the orientation problem by means of inertial system operation simulation [2]; generation of navigation parameters and position vertical.

The disadvantage of this method consists in limited capabilities of accuracy and dynamic characteristics.

The purpose of the invention is increase of accuracy characteristics and enhancement of dynamic capabilities of the method.

The technical effect is achieved in such a way:

- control signals of a gyro platform or a gyro platform model are generated under the condition that in the absence of ballistic deviations a natural period of the gyro platform or the gyro platform model differs from Schuler period;
- asymptotic stability (autonomous damping) of each inertial system or each inertial system model is provided using differences of the similar data generated by inertial systems or their models with different natural periods and (or) using values of observable generalized coordinates of the system or its model;
- estimation of instrumental errors is provided using differences of the similar data generated by inertial systems or their models with different natural periods (with different parameters "n") and in different modes;
- accuracy of the vehicle heading generation is increased and readiness time is reduced due to increasing directing force to the compass meridian.

The maximum effect in estimation of instrumental errors and improvement of dynamic behavior of the system is provided by analytical solution of the orientation problem. In this case the similar data from different models of inertial systems with different parameters and in different modes are compared.

We can present several examples of inertial systems for implementation of the method: an inertial system with linear correction with a gyro platform in two-axis and three-axis gimbals; an inertial system with linear correction in joint operation with an inertial system with integral correction; a strapdown inertial system. Let's consider the most general case.

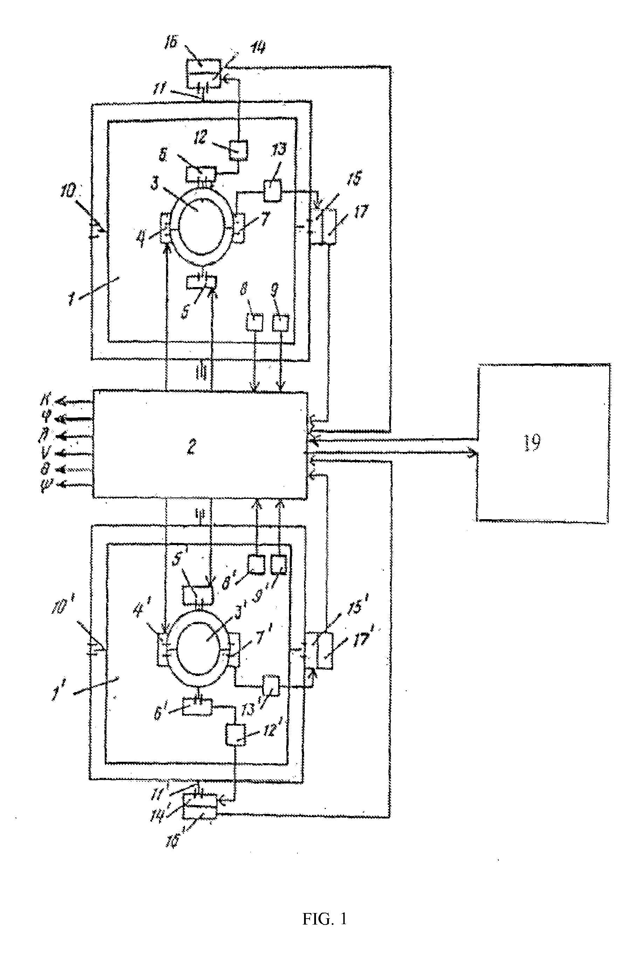

The drawing presents a functional block diagram of the inertial system for implementation of the method (see Fig. 1).

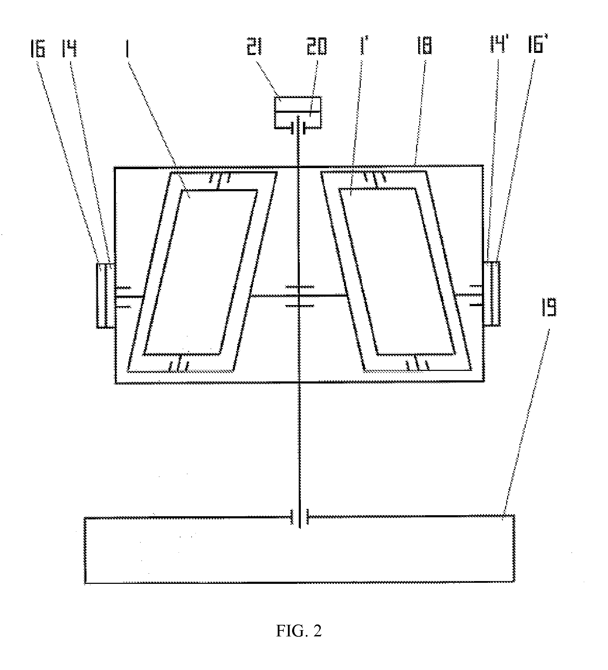

The inertial system with linear correction, which is under consideration, consists of two structurally identical stabilized gyro platforms 1 and 1' and unit 2 - a unit of control and output parameter generation. One two-degree-of-freedom gyroscope (3 and 3') is located on each stabilized gyro platform. And with this, angular momentum of the gyro is perpendicular to the plane of the gyro platform. Gyroscopes have torquers 4, 5 and 4', 5' and angular pick-offs 6, 7 and 6', 7'. Besides, accelerometers 8, 9 and 8', 9' are mounted on each stabilized gyro platform. Accelerometer sensitivity axes on each gyro platform are orthogonal between each other and are parallel to the gyro platform plane. The axis of one accelerometer is parallel to the inner axis of the gyro platform gimbal. Outer axes of gimbals 11 and 11' are installed in the common gimbal ring 18 (see Fig. 2). The axis of the common gimbal ring is installed on the horizon-stabilized platform 19. Axes 11 and 11' are parallel to the plane of the stabilized platform 19 and are parallel to each other. Motor 20 and heading sensor 21 are located on the common gimbal ring axis. Angular pick-offs 16 and 16', measuring speed deviations $\alpha_1$ and $\alpha_2$, and motors 15 and 15' are also located on the common ring 18.

By means of amplifiers 12, 13 and 12', 13' outputs of angular pick-offs 6, 7 and 6', 7' of gyroscopes 3 and 3' are connected with inputs of motors 14, 15 and 14', 15', which are connected with the gimbal axes. Angular pick-offs 16, 17 and 16', 17' are connected with the same axes. Inputs of torquers 4, 5 and 4', 5' of gyros 3 and 3' are connected with the corresponding outputs of control and output parameter generation unit 2. Outputs of accelerometers 8, 9 and 8', 9' and angular pick-offs 16, 17 and 16', 17' are connected with the corresponding inputs of unit 2. Unit 2 has data communication with the inertial system with integral correction.

Outputs of unit 2 for users are $K$ - vehicle heading, $\varphi$ - latitude, $\lambda$ - longitude, $\theta$ and $\psi$ - roll and pitch angles.

The proposed system operates as follows. With the help of motors 14, 15 and 14', 15' respectively by error signals from angular pick-offs 6, 7 and 6', 7' of gyros 3 and 3' each gyro platform is constantly kept in one plane with the gyro housing.

The housing of each gyro together with the gyro platform is brought to the position corresponding to the prescribed value of speed deviation for the given gyro platform with the help of moments applied via torquers 4, 5 and 4', 5' of gyros 3 and 3' by control currents by signals generated in unit 2. Since the prescribed values of speed deviations are different for each gyro platform, differences in readings of angular pick-offs 16 and 16' are the initial data sources for determination of horizontal component of absolute angular rate of Darboux trihedral. Using servo motor 20 the plane of the common gimbal ring 18 is constantly kept in direction perpendicular to the plane of compass meridian.

Let's choose Darboux $E_0N_0\zeta_0$ moving trihedral, axis $ON_0$ of which is oriented by the horizontal component of absolute angular rate $\dfrac{V}{R}$ , as the initial coordinate system.

Then projections of absolute angular rate of the trihedral $E2N2\zeta$ 2 on its axes will be $0$; $\dfrac{V}{R}$ ; $r$. Projections of trihedral vertex acceleration $E_0N_0\zeta_0$ on its axes $OE_0$ and $ON_0$ are $\dot{V}$; $rV$; $g$, where $g$ - force of gravity.

Let the right coordinate system $E_1N_1\zeta_1$ be rigidly bound with the gyro housing of the first gyro platform. Let coordinate system $E_2N_2\zeta_2$ be rigidly bound with the gyro housing of the second gyro platform. Coordinate system $E_1N_1\zeta_1$ will be obtained by turning around axis $OE_0$ at angle $\alpha_1$ and around auxiliary axis $ON_1'$ at angle $\beta 1$. Coordinate system $E_2N_2\zeta_2$ will be obtained by turning around axis $OE_0$ at angle $\alpha_2$ and around auxiliary axis $ON_2'$ at angle $\beta_2$.

Projections of absolute angular rate of trihedrals $E_1N_1\zeta_1$ and $E_2N_2\zeta_2$ on their axes $OE_1$; $ON_1$ ; $OE_2$ ; $ON_2$, taking account of gyro drifts, will be

$$\Omega_{E1} = \dot{\alpha}_1 + \left( \frac{V}{R} \sin\alpha_1 - r\cos\alpha_1 \right)\beta_1 + \Delta p_1$$

$$\Omega_{N1} = \dot{\beta}_1 + \frac{V}{R}\cos\alpha_1 + r\sin\alpha_1 + \Delta q_1$$

$$\Omega_{E2} = \dot{\alpha}_2 + \left( \frac{V}{R} \sin\alpha_2 - r\cos\alpha_2 \right)\beta_2 + \Delta p_2$$

$$\Omega_{N2} = \dot{\beta}_2 + \frac{V}{R}\cos\alpha_2 + r\sin\alpha_2 + \Delta q_2$$

The specific force projections of vertex of trihedrals $E_1N_1\zeta_1$ and $E_2N_2\zeta_2$ by axes $OE_1$ ; $ON_1$ and axes $OE_2$ ; $ON_2$ will be the following:

$$W_{E1} = \dot{V} - \left( g\cos\alpha_1 - rV\sin\alpha_1 \right)\beta_1 + \Delta W_{E1}$$

$$W_{N1} = g\sin\alpha_1 + rV\cos\alpha_1 + \Delta W_{N1}$$

$$W_{E2} = \dot{V} - \left( g\cos\alpha_2 - rV\sin\alpha_2 \right)\beta_2 + \Delta W_{E2}$$

$$W_{N2} = g \sin \alpha_2 + rV \cos \alpha_2 + \Delta W_{N2}$$

where $\Delta p_1$ ; $\Delta p_2$ ; $\Delta q_1$; $\Delta q_2$ - gyro drifts.

$\Delta W_{E1}$ ; $\Delta W_{N1}$ ; $\Delta W_{E2}$ ; $\Delta W_{N2}$ - accelerometer errors.

In order to provide the gyro platform natural period that differs from Schuler period, invariant values of speed deviations can be as follows, for example:

$$tg\alpha_1 = \frac{n_1}{\omega_0} \frac{V}{R}; \quad tg\alpha_2 = \frac{n_2}{\omega_0} \frac{V}{R} \quad \text{or} \quad \sin\alpha_1 = \frac{n_1}{\omega_0} \frac{V}{R}; \quad \sin\alpha_2 = \frac{n_2}{\omega_0} \frac{V}{R}$$

gyro control signals in coordinate systems $E_1 N_1 \zeta_1$ and $E_2 N_2 \zeta_2$ can have the form, for example,

$$\Omega_{E1con.} = \frac{n_1}{\omega_0} \frac{W_{E1}}{R} - \frac{n_1}{\omega_0} \frac{\dot{V}_{dev.}}{R} \sin^2 \alpha_{dev.}; \Omega_{N1con.} = \frac{n_1}{\omega_0} \frac{(W_{N1} + W_{N2})}{2R} + \frac{V_{dev.}}{R} \cos \alpha_{dev.}$$

$$\Omega_{E2con.} = \frac{n_2}{\omega_0} \frac{W_{E2}}{R} - \frac{n_2}{\omega_0} \frac{\dot{V}_{dev.}}{R} \sin^2 \alpha_{dev.}; \Omega_{N2con.} = \frac{n_2}{\omega_0} \frac{(W_{N1} + W_{N2})}{2R} + \frac{V_{dev.}}{R} \cos \alpha_{dev.}$$

where $\omega_0$ - Schuler frequency; $n_1$; $n_2$ - system parameters.

Let's assume that $n_2 = -n_1 = n$ , $2\alpha$ $dev.$ = $\alpha_2$ - $\alpha_1$- difference in readings of angular pick-offs 16' and 16;

In order to provide invariant values of speed deviations for conditions $\sin\alpha_1 = \frac{n_1}{\omega_0} \frac{V}{R}; \sin\alpha_2 = \frac{n_2}{\omega_0} \frac{V}{R}$ gyro control signals can have the form, for example,

$$\Omega_{E1con.} = \frac{n_1}{\omega_0 \cos \alpha_{dev.}} \frac{W_{E1}}{R}; \Omega_{N1con.} = \frac{\omega_0}{n_1} \dot{\sin} \alpha_{dev.} \cos \alpha_{dev.} - \frac{n_1 (W_{N1} + W_{N2})}{\omega_0 \cos \alpha_{dev.} 2R}$$

$$\Omega_{E2con.} = \frac{n_2}{\omega_0 \cos \alpha_{dev.}} \frac{W_{E2}}{R}; \Omega_{N2con.} = \frac{\omega_0}{n_2} \dot{\sin} \alpha_{dev.} \cos \alpha_{dev.} - \frac{n_2 (W_{N1} + W_{N2})}{\omega_0 \cos \alpha_{dev.} 2R}$$

A signal providing control stability of motor 20 will be $\Delta \dot{K} = F (\beta_2 - \beta_1)$,
where
$\Delta \dot{K}$ - error in generation of compass heading;
$F$ - transfer function;
$\beta_2 - \beta_1$ - difference in readings of angular pick-offs 17' and 17.

With $n > 1$ the directing force affecting the gyro increases, thus the gyro drift influence on the accuracy of generated parameters reduces. And with this, the accuracy of the vehicle heading generation increases sufficiently.

Using angle value $\alpha_{dev.}$ a horizontal component of absolute angular rate is generated from the relations:

$$\frac{V_{dev.}}{R} = \frac{\omega_0}{n} tg\alpha_{dev.}.$$

A vertical component of absolute angular rate of Darboux trihedral is generated from the relation:

$$r_{dev.} = \frac{\hat{W}_N}{V_{dev.} \cos\alpha_{dev.}}$$

Using values $\dfrac{V_{dev.}}{R}$ ; $r_{dev.}$ and compass heading $K_{GC}$ position coordinates $\varphi$ and $\lambda$ and vehicle heading $K$ are generated.

To illustrate the stated problem let's use control signals of gyro platforms or gyro platform models according to expressions (1).

System operation equations will be the following:

$$\Omega_{E1} = \Omega_{E1con.} \qquad\qquad \Omega_{N1} = \Omega_{N1con.}$$

$$-\Omega_{E2} = \Omega_{E2con.} \qquad\qquad -\Omega_{N2} = \Omega_{N2con}$$

Error equations for gyro platforms and gyro platform models, without allowance for the influence of members with vertical component of absolute angular rate $r$ will be the following:

$$-\Delta\overset{\sim}{\dot{\alpha}} - n\omega_0\cos^3\alpha \cdot \hat{\beta} = \Delta\tilde{p} + \frac{n}{\omega_0}\frac{\Delta\hat{W}_E}{R}$$

$$-\dot{\hat{\beta}} + \frac{\omega_0}{n\cos\alpha}\Delta\tilde{\alpha} = \Delta\hat{q} \tag{2}$$

$$-\Delta\dot{\hat{\alpha}} - n\omega_0\cos\alpha \cdot \tilde{\beta} = \Delta\hat{p} + \frac{n}{\omega_0}\frac{\Delta\tilde{W}_E}{R}$$

$$-\dot{\tilde{\beta}} + n\omega_0\cos\alpha \cdot \Delta\dot{\hat{\alpha}} = \Delta\tilde{q} + \frac{n}{\omega_0}\frac{\Delta\hat{W}_N}{R} \tag{3}$$

where $\Delta\hat{\tilde{\alpha}}$; $\hat{\tilde{\beta}}$- characterize errors in generation of horizon plane by gyro pendulums.

And with this, $\quad \Delta\tilde{\alpha} = \dfrac{\Delta\alpha_2 - \Delta\alpha_1}{2}$; $\quad \Delta\hat{\alpha} = \dfrac{\Delta\alpha_2 + \Delta\alpha_1}{2}$; $\quad \tilde{\beta} = \dfrac{\beta_2 - \beta_1}{2}$; $\quad \hat{\beta} = \dfrac{\beta_2 + \beta_1}{2}$;

where
$\Delta\alpha_1$ ; $\beta_1$ - errors of one gyro platform;
$\Delta\alpha_2$ ; $\beta_2$ - errors of another gyro platform;

$$\Delta\hat{p} = \frac{\Delta p_2 + \Delta p_1}{2}; \ \Delta\tilde{p} = \frac{\Delta p_2 - \Delta p_1}{2}; \ \Delta\hat{q} = \frac{\Delta q_2 + \Delta q_1}{2}; \ \Delta\tilde{q} = \frac{\Delta q_2 - \Delta q_1}{2};$$

$$\Delta\hat{W}_E = \frac{\Delta W_{E2} + \Delta W_{E1}}{2}; \ \ \Delta\tilde{W}_E = \frac{\Delta W_{E2} - \Delta W_{E1}}{2}; \ \ \Delta\hat{W}_N = \frac{\Delta W_{N2} + \Delta W_{N1}}{2}$$

As it follows from equations (2) and (3) the natural frequency of gyro platforms, in the absence of ballistic deviations by coordinates $\tilde{\beta}$ ; $\Delta\hat{\alpha}$, will be $n\omega_0 COS\alpha$, and by coordinates $\hat{\beta}$ ; $\Delta\tilde{\alpha}$ - $\omega_0 COS\alpha$ ; thus the natural frequency of gyro platforms or gyro platform models differs from Schuler frequency $\omega_0$. With this the degree of distinction depends on parameter «n».

$$T = \frac{2\pi}{\omega_0},\quad \text{where T is the Schuler period.}$$

As it follows from these equations (3), the directing force to the compass meridian increases will be $n\omega_0 COS\alpha$, and the error of vehicle heading generation in analytical solution of the orientation problem for inertial system models reduces $(n\cos\alpha)^2$ times:

$$\Delta\hat{K} = -\frac{\Delta\hat{p}}{\dfrac{V}{R}\left(n\cos\alpha\right)^2} = \frac{\tilde{\beta}}{\sin\alpha}$$

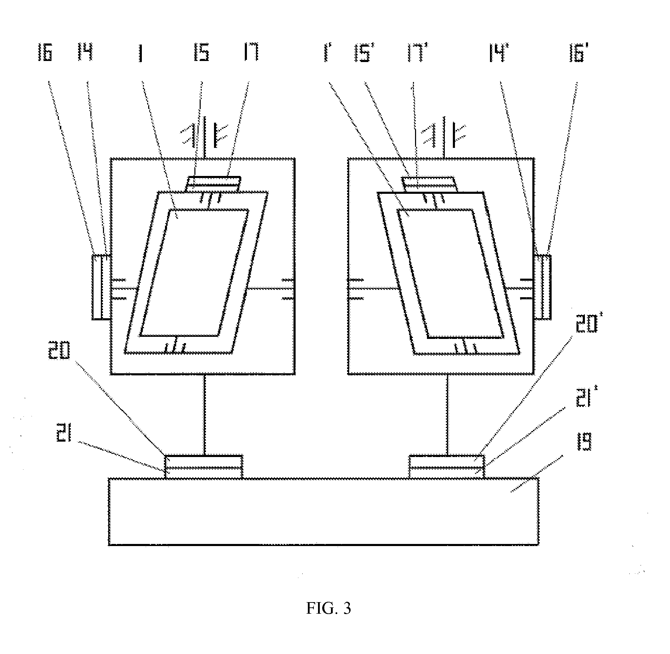

Figure 3 presents the diagram of an inertial system with linear correction with a gyro platform in two-axis gimbal suspension. It can be shown that an error in generation of compass heading in this case will be the following:

$$\Delta\hat{K} = -\frac{\Delta\hat{p}\cos\alpha}{\omega\cos\left(\varphi - \alpha\right)}$$

where $\omega$ - the Earth angular rate;
$\varphi$ - latitude.
Generalized coordinate $\Delta\tilde{K} = K_2 - K_1$ is observable.

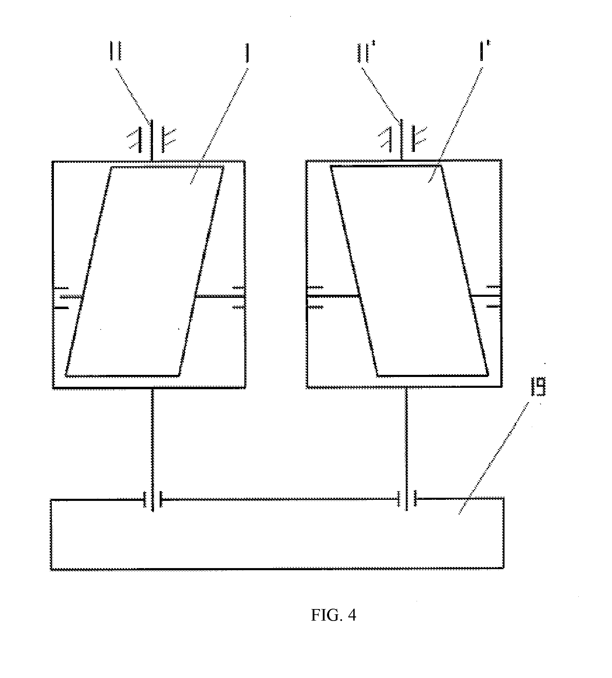

Figure 4 presents the diagram of an inertial system with linear correction with a gyro platform in three-axis gimbal suspension. Motor 20 is controlled by signal of angle-data transmitter 17. Motor 20' is controlled by signal of angle-data transmitter 17'. It can be shown that an error in generation of compass heading in this case will be the following:

$$\Delta \hat{K} = \frac{\tilde{\beta}}{\sin\alpha} = -\frac{\Delta \hat{p}}{\dfrac{V}{R}\left(n\cos\alpha\right)^2} \cdot$$

Generalized coordinate $\tilde{\beta}$ is observable.

Inertial system with integral correction which provides for gyro platforms horizon stabilization, can determine the values of the vehicle $K_{GCis}$ compass heading and value of the horizontal component of absolute angular velocity

$\dfrac{V}{R}{}_{is}$ itself independently by the horizontal components of absolute angular velocity of Darboux trihedron.

Using the accelerometers' readings the inertial system can determine projections of Darboux trihedron $E_0N_0\zeta_0$ vertex acceleration onto its axes $ON_0$ and $OE_0$; $(rV)_{is}$ and $\dot{V}_{is}$.

The above mentioned information together with the information of the same name generated by the inertial system with linear correction under consideration can be used to control both these systems.

Using signals of difference of the information of the same name, asymptotic stability (damping) of the two systems having different frequency behavior is provided as well as estimates of their instrumental errors. In strapdown implementation of the inertial systems the tasks mentioned are solved by simulation.

Literature:

[1] V.A.Belenkiy - Patent N⬚ 2000544 RUS
[2] A.V.Repnikov, G.P.Sachkov, A.I.Chernomorskiy - "Gyroscopic systems".

**Claims**

**1.** The method of generation of navigation parameters and position vertical includes:

- measurement of specific force components using accelerometers, sensitivity axes of which are connected with the gyro platform; generation of gyro platform control signals; following to indicate the generated signals using a gyro or absolute angular rate sensors, or
- measurement of specific force components using accelerometers; measurement of signals from gyros or absolute angular rate sensors, sensitivity axes of which are directed along axes of the instrumental trihedral; analytical solution of the orientation problem by means of inertial system operation simulation; generation of navigation parameters and position vertical,
- differs by the fact that control signals of a gyro platform or a gyro platform model are generated under the condition that in the absence of ballistic deviations a natural period of the gyro platform or the gyro platform model differs from Schuler period.

**2.** The method of generation of navigation parameters and position vertical includes:

- measurement of specific force components using accelerometers, sensitivity axes of which are connected with the gyro platform; generation of gyro platform control signals; following to indicate the generated signals using a gyro or absolute angular rate sensors, or
- measurement of specific force components using accelerometers; measurement of signals from gyros or absolute angular rate sensors, sensitivity axes of which are directed along axes of the instrumental trihedral; analytical solution of the orientation problem by means of inertial system operation simulation; generation of navigation parameters and position vertical,
- differs by the fact that asymptotic stability (autonomous damping) of each inertial system or each inertial system model is provided using differences of the similar data generated by inertial systems or their models with different natural periods.

3.  The method of generation of navigation parameters and position vertical includes:

    - measurement of specific force components using accelerometers, sensitivity axes of which are connected with the gyro platform; generation of gyro platform control signals; following to indicate the generated signals using a gyro or absolute angular rate sensors, or
    - measurement of specific force components using accelerometers; measurement of signals from gyros or absolute angular rate sensors, sensitivity axes of which are directed along axes of the instrumental trihedral; analytical solution of the orientation problem by means of inertial system operation simulation; generation of navigation parameters and position vertical,
    - differs by the fact that estimation of instrumental errors is provided using differences of the similar data generated by inertial systems or their models with different natural periods (with different parameters "n").

4.  The method of generation of navigation parameters and position vertical includes:

    - measurement of specific force components using accelerometers, sensitivity axes of which are connected with the gyro platform; generation of gyro platform control signals; following to indicate the generated signals using a gyro or absolute angular rate sensors, or
    - measurement of specific force components using accelerometers; measurement of signals from gyros or absolute angular rate sensors, sensitivity axes of which are directed along axes of the instrumental trihedral; analytical solution of the orientation problem by means of inertial system operation simulation; generation of navigation parameters and position vertical,
    - differs by the fact that accuracy of the vehicle heading generation is increased and the system readiness time is reduced due to increasing directing force to the compass meridian.

**Amended claims under Art. 19.1 PCT**

1. The method of generation of navigation parameters and position vertical includes:

    - measurement of specific force components using accelerometers, sensitivity axes of which are connected with the gyro platform; generation of gyro platform control signals; following to indicate the generated signals using a gyro or absolute angular rate sensors, or
    - measurement of specific force components using accelerometers; measurement of signals from gyros or absolute angular rate sensors, sensitivity axes of which are directed along axes of the instrumental trihedral; analytical solution of the orientation problem by means of inertial system operation simulation; generation of navigation parameters and position vertical,
    - differs by the fact that control signals of a gyro platform or a gyro platform model are generated under the condition that in the absence of ballistic deviations a natural period of the gyro platform or the gyro platform model differs from Schuler period.

2. The method of generation of navigation parameters and position vertical includes:

    - measurement of specific force components using accelerometers, sensitivity axes of which are connected with the gyro platform; generation of gyro platform control signals; following to indicate the generated signals using a gyro or absolute angular rate sensors, or
    - measurement of specific force components using accelerometers; measurement of signals from gyros or absolute angular rate sensors, sensitivity axes of which are directed along axes of the instrumental trihedral; analytical solution of the orientation problem by means of inertial system operation simulation; generation of navigation parameters and position vertical,
    - differs by the fact that asymptotic stability (autonomous damping) of each inertial system or each inertial system model is provided using differences of the similar data generated by inertial systems or their models with different natural periods and (or) using values of observable generalized coordinates of the system or its model.

3. The method of generation of navigation parameters and position vertical includes:

    - measurement of specific force components using accelerometers, sensitivity axes of which are connected with the gyro platform; generation of gyro platform control signals; following to indicate the generated signals using a gyro or absolute angular rate sensors, or
- measurement of specific force components using accelerometers; measurement of signals from gyros or absolute angular rate sensors, sensitivity axes of which are directed along axes of the instrumental trihedral; analytical solution of the orientation problem by means of inertial system operation simulation; generation of navigation parameters and position vertical,
- differs by the fact that estimation of instrumental errors is provided using differences of the similar data generated by inertial systems or their models with different natural periods, including those with different parameters "n".

**4.** The method of generation of navigation parameters and position vertical includes:

- measurement of specific force components using accelerometers, sensitivity axes of which are connected with the gyro platform; generation of gyro platform control signals; following to indicate the generated signals using a gyro or absolute angular rate sensors, or
- measurement of specific force components using accelerometers; measurement of signals from gyros or absolute angular rate sensors, sensitivity axes of which are directed along axes of the instrumental trihedral; analytical solution of the orientation problem by means of inertial system operation simulation; generation of navigation parameters and position vertical,
- differs by the fact that accuracy of the vehicle heading generation is increased and the system readiness time is reduced due to increasing directing force to the compass meridian.

**5.** The method of generation of navigation parameters and position vertical includes:

- measurement of specific force components using accelerometers, sensitivity axes of which are connected with the gyro platform; generation of gyro platform control signals; following to indicate the generated signals using a gyro or absolute angular rate sensors, or
- measurement of specific force components using accelerometers; measurement of signals from gyros or absolute angular rate sensors, sensitivity axes of which are directed along axes of the instrumental trihedral; analytical solution of the orientation problem by means of inertial system operation simulation; generation of navigation parameters and position vertical, and differs by the fact that control signals of gyro platforms are generated to provide, in the absence of ballistic deviations, either nonlinear relation between a value of speed deviation and a value of horizontal component of the vehicle absolute angular rate, or the relation of type

$$\alpha = \frac{n}{\omega_0} \frac{V}{R}$$

at small values of speed deviations, with which relations $tg\alpha = \sin \alpha = \alpha$ are admissible.

FIG. 1

FIG. 2

FIG. 3

FIG. 4

## INTERNATIONAL SEARCH REPORT

| International application No. |
|---|
| PCT/RU 2005/000654 |

| A. CLASSIFICATION OF SUBJECT MATTER *G01C 21/18* (2006.01) |
|---|

According to International Patent Classification (IPC) or to both national classification and IPC

**B. FIELDS SEARCHED**

Minimum documentation searched (classification system followed by classification symbols)

G01C 21/00, 21/10, 21/12, 21/16, 21/18

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | RU 2046289 C1 (BELENKY V.A.) 20.10.1995 | 1-4 |
| A | RU 2082098 C1 (GOSUDARSTVENNY NAUCHNO-ISSLEDOVATELSKY INSTITUT AVIATSIONNYKH SISTEM) 20.06.1997 | 1-4 |
| A | EP 0392104 A1 (LITTON SYSTEMS INC) 17.10.1990 | 1-4 |
| A | RU 2098765 C1 (BELENKY V.A.) 10.12.1997 | 1-4 |
| A | RU 2126136 C1 (BELENKY V.A.) 10.02.1999 | 1-4 |
| A | GB 1212876 A (N.V. PHILIPS' GLOEILAMPENFABRIEKEN) 18.11.1970 | 1-4 |
| A | US 5359889 A (TEXTRON INC) 01.11 1994 | 1-4 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 May 2006 (25.05.2006)** | **25 May 2006 (25.05.2006)** |

| Name and mailing address of the ISA/ | Authorized officer |
|---|---|
| | |
| Facsimile No. | Telephone No. |

Form PCT/ISA/210 (second sheet) (April 2005)

## INTERNATIONAL SEARCH REPORT

International application No.

PCT/RU 2005/000654

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:

**see supplemental sheet**

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

<table>
<tr><td>**INTERNATIONAL SEARCH REPORT**<br>Information on patent family members</td><td>International application No.<br>PCT/RU 2005/000654</td></tr>
</table>

The International Searching Authority has determined that this international application contains three groups of inventions which are not linked by a single inventive concept. There is no technical relationship among these inventions involving one or more of the same or corresponding special technical features.

The first invention (claim 1) is a method in which the special technical feature is the generation of control signals for a gyro platform or a gyro platform model having a natural oscillation period that differs from the Schuler period.

The second invention (claims 2 and 3) is a method in which the special technical feature is the use of the difference between like bits of information produced by inertial systems having different natural oscillation periods, thereby providing autonomous damping of each inertial system and an evaluation of instrument error.

The third invention (claim 4) is a method in which the special technical feature is an increase in the directive force towards the compass meridian.

Form PCT/ISA/210 (patent family annex) (April 2005)